Europäisches Patentamt

European Patent Office

Office européen des brevets

(11) Publication number: **0 050 309**
**A1**

(12) **EUROPEAN PATENT APPLICATION**

(21) Application number: **81108334.4**

(22) Date of filing: **15.10.81**

(51) Int. Cl.³: **B 62 D 1/04**

(30) Priority: **17.10.80  IT 2542380**

(43) Date of publication of application: **28.04.82**
**Bulletin 82/17**

(84) Designated Contracting States: **DE FR GB**

(71) Applicant: **MOMO S.p.A., Via Ciro Menotti, 11,
I-20129 Milan (IT)**

(72) Inventor: **Cattaneo, Marco, Via Frank, 32, 27100 Pavia
(IT)**

(74) Representative: **Borella, Ada, Ing. A. Racheli & C. Viale
San Michele dei Carso, 4, I-20144 Milan (IT)**

(54) **A steering wheel for motor vehicles.**

㊾ Steering wheel for motor vehicles provided with two or more spokes (3, 4) and a ring (2) made by casting so as to have at the front all rounded shapes. It may comprise a single casting piece or two casting pieces, of which one substantially forms the outer circular ring and the other the spokes and central hub, or also several pieces, the first of which substantially forms the outer circular ring, a second of which forms the central hub, and the other individually comprise each one of the two or more steering wheel spokes.

0050309

Applicant:

MOMO S.p.A.

Via Ciro Menotti, 11

20129 - MILAN (Italy)


"A STEERING WHEEL FOR MOTOR VEHICLES"


This invention relates to an improved steering wheel for motor vehicles which may be both mounted as standard on motor vehicles or sold separately as a fitting.

Many types of steering wheels aiding in improving the appearance and safety of a car are already known. These steering wheels are usually formed of two or more aluminum spokes obtained by shearing from a sheet, said spokes being then welded or bolted to an iron ring. Steering wheels of this type suffer from several disadvantages. It should be first considered that owing to the technical characteristics of sheets, the spokes have considerable dimensions in width affording poor visibility of the instrumentation.

Additionally, the flat shape thereof easily provide opportunities of dangerous hindrances to driving. Finally, such spokes, by being produced from a sheared sheet, have thin side edges which may cause extended bruises; the sharp edge in conventional spokes may cause in case of accident (considering the usual behaviour of the body in case of collision) serious injuries to the driver. It should be taken into account also that conventional sheet-made spokes define a handgrip which is often unnatural and tiring for driving; moreover, during a violent impact, such spokes do not provide a sufficient guarantee for safety, because of sudden bending and accordingly do not take up the impact energy of the driver's body.

Therefore, it is the primary object of the present invention to provide a steering wheel ensuring a higher degree of safety in driving, at the same time providing a more comfortable handgrip over conventional steering wheels.

It is another object of the present invention to provide a comparatively inexpensive steering wheel.

The foregoing objects have been accomplished by providing a casting-made steering wheel, having at least at the front all rounded shapes.

This rounded shape for the spokes affords an increased mechanical strength allowing such a dimensioning as to enable the highest visibility of the instrumentation; the rounded shape removes the possibility of dangerous hindrances, does not cause any bruise, and affords the possibility of avoiding injuries to the driver in case of accident.

5. The rounded shape of the spokes further allows an anatomical type of handgrip not tiring the driver and enhancing his safety.

Casting may be performed in a single piece; in two pieces, of which one comprises the hub and spokes, and the other the outside ring; and finally in many castings, of which one will form the hub, another the outside ring and the remaining will form the individual spokes.

This technology providing the casting production for the pieces affords considerable advantages because of reduction in costs both as to equipments and working times.

Moreover, different models can be obtained through the change of minimal details, without having to prepare new dies.

According to a preferred solution of the invention, the outside ring and spokes may in case be lined with leather, plastics and the like.

A further preferred solution of the invention provides that both the spokes and outside ring be carried out with a substantially circular and oval section, the spokes being of flat hollow structure, that is made with cores of different shapes.

According to the present invention, when following the embodiment providing a plurality of separate casting, the stiffness of the supporting structure may be varied as desired. Thus, as well known, a steering wheel and relative coupling hub for the steering wheel column must comply with standards of impact absorption, and therefore it is extremely important that a steering wheel is capable of collapsing together with the hub without breakages being caused therein. The possibility of having a structure which may be suitably varied in stiffness enables to obtain, after proper collision tests, an optimum situation of compromise between stiffness and required collapsability.

Finally, a further embodiment provides that on the steering wheel ring adjacent to junction of two approximately diametrical spokes provision is made for notches and internal projections and respective external enlargements, arranged slightly at a lower level, respectively serving for bearing the driver's thumb and palm.

The addition is also provided of possible undulations on the rear of the ring, so as to aid in gripping the latter.

The invention will now be further explained with reference to the accompanying drawings, in which:

Fig. 1 is a front view of a steering wheel according to the present invention;

Figs. 2 and 3 are sectional views taken along lines II-II and III-III of Fig. 1, respectively;

Fig. 4 is a view showing another embodiment of a steering wheel according to the present invention;

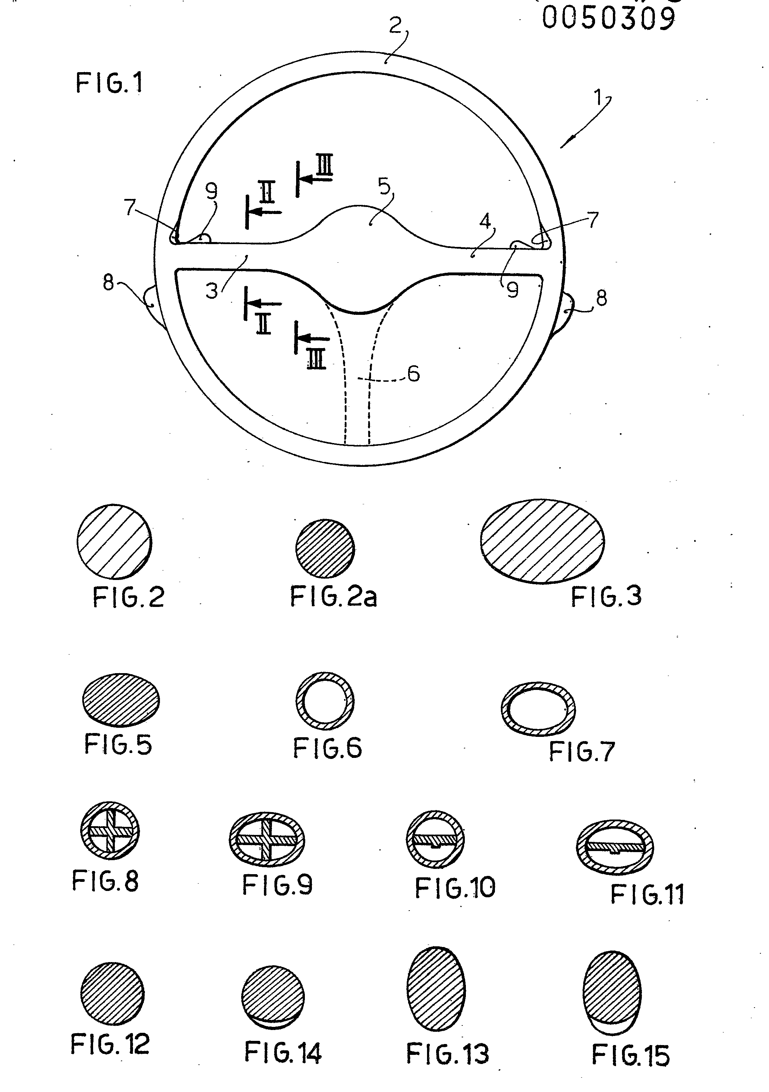

Figs. 2a, 5, 6, 7, 8, 9, 10 and 11 show different possible sectional views of the spokes taken along line A-A of Fig. 4;

Figs. 12, 13, 14 and 15 are views showing different possible embodiments for the outside ring of the steering wheel according to line B-B of Fig. 4;

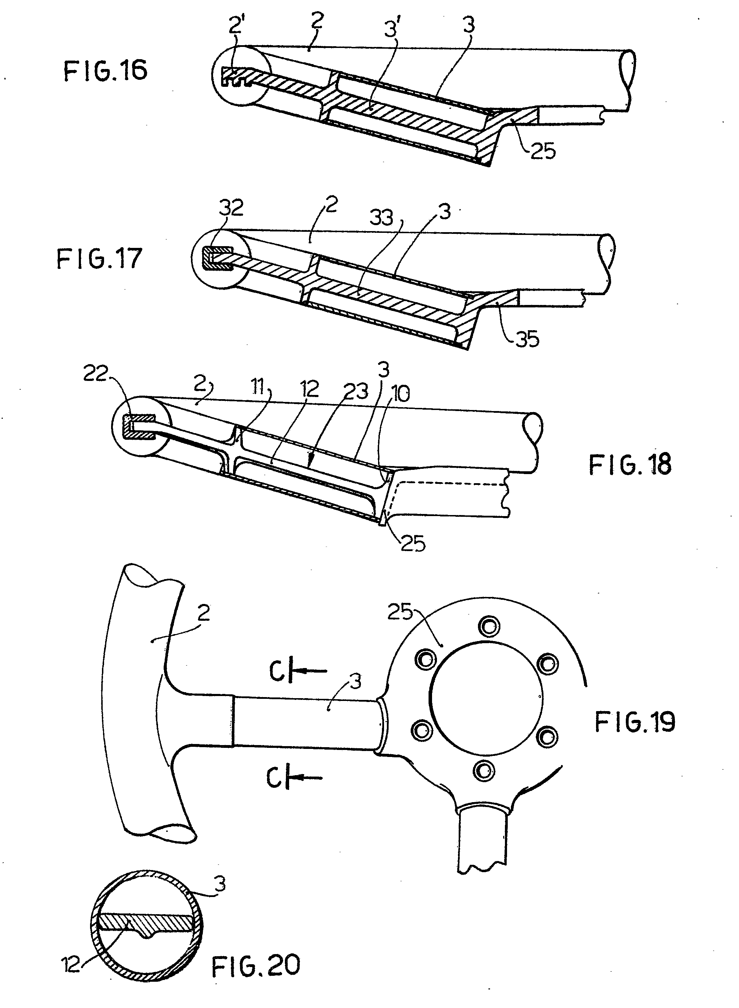

Fig. 16 is a fragmentary longitudinal sectional view showing an embodiment of a steering wheel according to the present invention as provided by a single casting;

Fig. 17 is a sectional view showing a portion of an embodiment in two pieces according to the present invention;

Fig. 18 is fragmentary longitudinal sectional view showing an embodiment carried out in a plurality of pieces;

Fig. 19 is a plan view of Fig. 18;

Fig. 20 is a cross-sectional view of Fig. 19, taken along line C-C;

Fig. 21 is a view showing a further embodiment of a steering wheel according to the present invention, not having parallel spokes; and

Fig. 22 is a rear view of an embodiment of a steering wheel according to the present invention.

Fig. 1 is a view showing a steering wheel, generally designated at 1, which is formed of a ring 2 and spokes 3 and 4 centrally joining so as to form a hub 5, which will be made and worked, as normally used for steering wheels in motor vehicles.

It is also possible to provide a further spoke 6, which has been shown by dashed lines in Fig. 1.

According to this embodiment, a steering wheel comprises a casting, so that both the outside ring and spokes can be made with rounded sections, for example as shown in Figs. 2 and 3, the first figure of which showing a round section taken at zone II-II, and the second of which showing an oval section taken at zone III-III.

As obvious, the section of the spokes may be uniform throughout the length thereof, and in this case the section may be, for example, uniformly round or oval. The section of the spoke could also vary differently from shown, as indicated in Figs. 6, 7, 8, 9, 10 and 11.

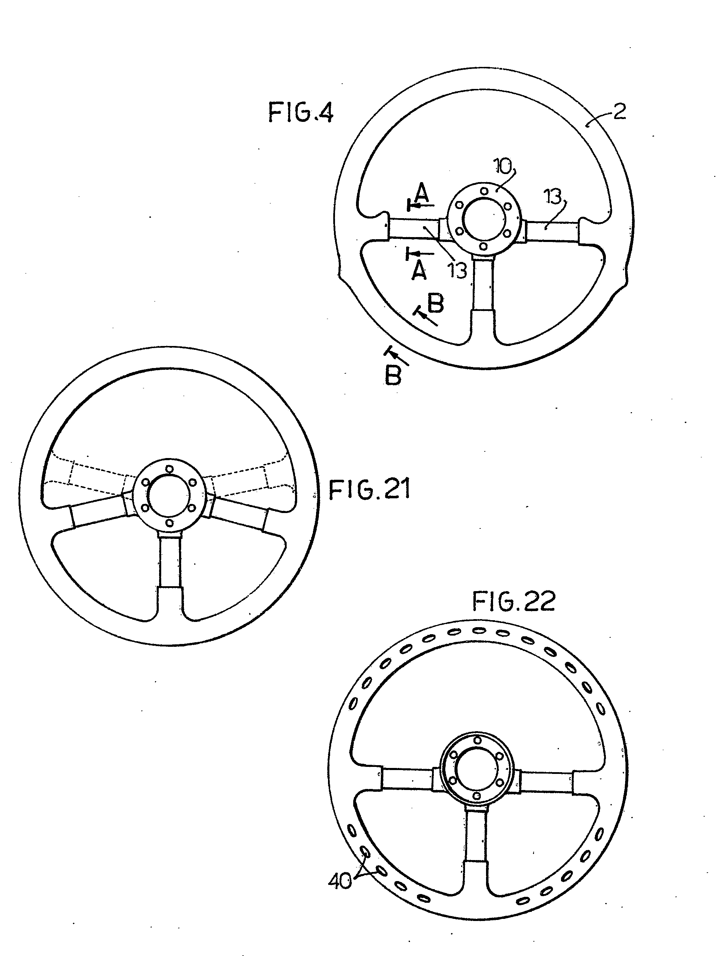

The section of the outside ring of the steering wheel may take the shapes as shown in Figs. 12, that is circular or in Fig. 13, that is oval. The ring may also be circular with notches as shown in Fig. 14, and oval with notches as shown in Fig. 15.

A steering wheel according to the present invention may be carried out in a single piece, as shown in the plan view of Fig. 1 and in the sectional view of Fig. 16, wherein the hub is integral with the core of spokes 3 and circular outer ring 2'. The parts 2 and 3 shown of the ring and spokes comprise linings, respectively.

A steering wheel according to the present invention could also be made, as shown in Fig. 17, in two elements of which, the central one comprising the hub 35 and spokes 33 is inserted in the circular outside ring 32. Also in this case, the pieces 32 and 33 will be covered with linings 2 and 3.

A third embodiment is shown in Fig. 18, in which the steering wheel comprises several elements. Thus, such a steering wheel comprises a central hub 25, an outside ring 22 and two or more spokes 23, individually constituting single casting elements, and are then composed as shown in the sectional view of Fig. 18 and in the plan view of Fig. 19. According to this particular embodiment shown in these figures of the drawings, the central section of the spoke comprises, see Fig. 20, a core 12 having a lower central rib, while having at the locations for attachment with the central hub 25 and outside ring 22 tabs 10 and 11, respectively, for the fastening thereof. Beyond said tab 11, said core 12 of the spoke is continued, inserting within the circular outside ring 22, remaining secured thereto by known processes. Said ring 22 and spokes 23 are covered with linings 2 and 3.

According to both the embodiment of Fig. 19 and the embodiment of Fig. 1 or Fig. 17, the spokes may be provided at any position, as shown for example in Fig. 21. a-ditionally, the spokes may be not all directed to the center of the hub, as occurs for example for the spokes 13 of Fig. 4, which spokes are out-of-center with respect to the hub 10.

Antislip notches 40 are shown in Fig. 22. They are provided rearwardly of the ring of the steering wheel.

A further possible improvement on the steering wheel is to provide (see Figs. 1 and 4) a notch 7 or a projection 9 for the bearing of a thumb and an external enlargement 8 serving for the bearing of the palm of a hand.

As already known in several steering wheels, it will be preferably provided a hub which is re-entering relative to the plane containing said ring 2, that is a hub 5 which will be at a farther distance from the driver than said ring 2.

5. This invention comprises all of those changes in detail and modifications which may  be obvious to those skilled in the art.

MOMO S.p.A.

20129 - MILAN (Italy)


C L A I M S


1.      A steering wheel for motor vehicles, having two or more spokes (3, 4) and a ring (2) tmade by casting so as to have all rounded shapes characterized in that the section of the spokes is externally of circular or oval shape, and internally may be made with full, hollow sections, or with a cross or ribbed core (12, 33, 3').

2.      A steering wheel according to Claim 1, characterized in that said circular outside ring is of circular or oval section.

3.      A steering wheel according to Claim 1, characterized in that along the length thereof said spokes change in section, for example passing from a circular section to an oval section.

4.      A steering wheel according to Claim 1, characterized by comprising a single casting piece (25, 3', 2').

5.      A steering wheel according to Claim 1, characterized by comprising two pieces, one of which forms substantially said circular outside ring (32), and the other the spokes (33) and the central hub (35).

6.    A steering wheel according to Claim 1, characterized by being cast comprises several pieces or elements, of which one substantially forms the circular outside ring (22), a second one of which substantially forms the central hub (25), while the other of which individually form each one of the two or more spokes (12) of the steering wheel.

7.    A steering wheel according to Claim 1, characterized in that said spokes are globet-like arranged, the major base of which comprising said ring (22, 32, 2') faces the driver.

8.    A steering wheel according to Claim 1, characterized by this wheel is further provided adjacent the connection between spokes spokes (4) and ring with an inner notch (7) for the bearing of a thumb and with an outer enlargement (8) for the bearing of the palm of the driver's hand.

9.    A steering wheel according to Claim 1, wherein the wheel also comprises antiskid notches (40) arranged rearwardly of the ring forming said steering wheel.

FIG.1

FIG.2

FIG.2a

FIG.3

FIG.5

FIG.6

FIG.7

FIG.8

FIG.9

FIG.10

FIG.11

FIG.12

FIG.14

FIG.13

FIG.15

FIG.4

2

10

A

13

A

13

B

B

FIG.21

FIG.22

40

FIG.16

FIG.17

FIG.18

FIG.19

FIG.20

## DOCUMENTS CONSIDERED TO BE RELEVANT

| Category | Citation of document with indication, where appropriate, of relevant passages | Relevant to claim |
|---|---|---|
| A | FR - A - 553 348 (RENAULT) <br> * Complete; figures 1,3 * | 1 |
| A | GB - A - 1 373 497 (STOTE) <br> * Claims; figures 1-4 * | 1 |
| A | FR - A - 1 427 108 (CITROEN) <br> * Abstract; figures 1,2 * | 1 |
| A | FR - A - 1 446 449 (DARRAS) <br> * Abstract; figures 1-3 * | 1 |
| A | FR - A - 2 369 777 (PERSMAL SPA) <br> * Claims; figure 1 * | 8 |
| A | US - A - 1 481 530 (BECK) | |
| A | FR - A - 755 194 (WOLFF) | |
| A | FR - A - 1 130 936 (SCHMID) | |

----

**CLASSIFICATION OF THE APPLICATION (Int. Cl. 3)**

B 62 D 1/04

**TECHNICAL FIELDS SEARCHED (Int.Cl. 3)**

B 62 D

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-01-1982 | PIRIOU |

EPO Form 1503.1 06.78